Europäisches Patentamt

**European Patent Office**

Office européen des brevets

(11) Numéro de publication: **0 099 144**
**A2**

# (12) DEMANDE DE BREVET EUROPEEN

(21) Numéro de dépôt: **83200917.9**

(22) Date de dépôt: **21.06.83**

(51) Int. Cl.³: **B 01 D 35/10**
**B 01 D 46/28**

(30) Priorité: **15.07.82 FR 8212536**

(43) Date de publication de la demande:
**25.01.84 Bulletin 84/4**

(84) Etats contractants désignés:
**AT BE CH DE GB IT LI LU NL SE**

(71) Demandeur: **SOIF S.A.**
**Immeuble Guardiola - chemin des Amandiers**
**F-32700 Lectoure(FR)**

(71) Demandeur: **Dumont, Marc**
**4, place de l'Aigoual**
**F-31770 Colomiers(FR)**

(72) Inventeur: **Dumont, Marc**
**4, Place de L'Aigoual**
**F-31770 Colomiers(FR)**

(74) Mandataire: **Barre, Philippe**
**Cabinet Barre, Gatti, Laforgue 95, rue des Amidonniers**
**F-31069 Toulouse Cedex(FR)**

(54) Dispositif de filtration d'un fluide et cartouche de filtration appelée à équiper ledit dispositif.

(57) L'invention concerne un dispositif de filtration d'un fluide, du type comprenant un corps 1 et au moins une cartouche perméable de filtration 2 contenue à l'intérieur dudit corps et agencée pour être traversée par le fluide à filtrer. La cartouche de filtration comprend un support rigide 9 percé d'ouvertures de passage 12 et contre lequel est disposée au moins une nappe 11a de fibres textiles à mailles dilatables; cette nappe 11a est dotée, sur sa face externe, d'une multitude de filaments 11b accrochés áux fibres de ladite nappe. Cette, dernière peut en particulier se présenter sous la forme d'une chaussette extensible 11 emmanchée autour du support rigide 9.

EP 0 099 144 A2

./...

# DISPOSITIF DE FILTRATION D'UN FLUIDE ET CARTOUCHE DE FILTRATION APPELEE A EQUIPER LEDIT DISPOSITIF

L'invention concerne un dispositif de filtration d'un fluide et s'étend à une cartouche de filtration appelée à équiper ledit dispositif ; elle s'applique en particulier mais non exclusivement à la filtration des liquides et notamment à la filtration aqueuse dans les divers secteurs techniques concernés : irrigation agricole (en goutte-à-goutte ou autre), station d'épuration d'eau, piscines, filtrations domestiques etc...

Les qualités dominantes qui sont généralement recherchées dans les dispositifs de filtration sont essentiellement les suivantes :

- faible valeur de la perte de charge introduite dans l'écoulement,

- bonne fiabilité de la filtration liée à la certitude avec laquelle les particules de dimensions supérieures à une valeur limite précise seront retenues,

- grande capacité de rétention, d'où dépendra la fréquence des nettoyages et décolmatages nécessaires,

- commodité et facilité des opérations de nettoyages et décolmatages,

- encombrement et coût réduits.

Ces qualités n'ont jamais pu être réunies de façon satisfaisante dans les dispositifs connus, certaines paraissant d'ailleurs à priori incompatibles entre elles.

Par exemple, les deux types de dispositifs de filtration les plus répandus dans le domaine de l'irrigation sont les filtres à sables et les filtres à tamis métalliques. Les premiers ont en général une bonne capacité de rétention car ils réalisent une filtration en profondeur. Toutefois, les pertes de charge introduites dans l'écoulement par ce type de filtres sont très élevées par unité de surface en raison du faible coefficient de vide du matériau filtrant (inférieur à 30 %) ; en outre, la fiabilité de la filtration est médiocre du fait des risques d'appa-

2

rition de cheminements préférentiels du fluide à l'intérieur du sable ; de plus, les opérations de nettoyages et décolmatages impliquent des manipulations importantes ; enfin, ces dispositifs sont lourds et encombrants car ils nécessitent, pour un débit donné, de grandes surfaces de filtration.

Les filtres à tamis métallique assurent généralement une bonne fiabilité de filtration. Toutefois, quoique atténué par rapport aux filtres à sable, le défaut concernant les pertes de charge subsiste car le coefficient de vide de ces filtres demeure relativement bas (de l'ordre de 40 à 50 %) ; de plus, leur capacité de rétention est faible et leur colmatage relativement rapide ; le décolmatage de ces filtres exige généralement des manipulations moins longues que dans le cas des filtres à sable, mais ce décolmatage ne peut être effectué automatiquement de façon satisfaisante et requiert un retrait du tamis métallique de filtration ; de plus, après nettoyage on observe un colmatage résiduel dans ce type de dispositif. Enfin, les tamis métalliques de bonne qualité sont la plupart du temps en acier inoxydable et leur coût est élevé.

Par ailleurs, dans le brevet FR n° 2 160 827 (CHEMADEX) est décrit un dispositif dans lequel une nappe textile élastique est tendue pour produire une filtration. Toutefois, un tel dispositif est inapte à produire une filtration en profondeur et sa capacité de rétention est faible, ce qui conduit à des fréquences élevées de nettoyages et de décolmatages. De plus, la nappe prévue dans ce brevet est fortement tendue par des tendeurs de façon à l'immobiliser et son décolmatage est une opération difficile qui exige de soumettre le dispositif à des vibrations comme le soulignent les auteurs du brevet.

Il est à noter, en outre, que le brevet BE n° 663 928 (BAYER) décrit une nappe filtrante et vise à donner à cette nappe une stabilité dimensionnelle et une rigidité, aussi grandes que possible. A cet effet, la nappe est constituée par un tissu à mailles, qui est soumis à un flocage puis à des opérations de calandrage et d'apprêt. Le flocage consiste à appliquer sur le tissu des fibres entremêlées qui sont collées sur celui-ci au moyen d'un liant adhésif ; ces fibres qui ont une longueur de coupe de 1mm environ se collent sur la plus grande partie de leur longueur sur le tissu, ce qui rigidifie celui-ci et améliore son effet filtrant. Le calandrage consiste à laminer la nappe, de sorte que les fibres se trouvent définitivement appliquées sur le tissu, ce qui améliore la stabilité dimensionnelle de la nappe. L'apprêtage complémentaire (opération analogue à un empesage) accentue encore la rigidification de la nappe.

On pourrait penser utiliser une telle nappe dans un dispositif du type de celui décrit dans le brevet n° 2 160 827 évoqué précédemment. Mais le problème de la filtration n'en serait pas résolu pour autant, car :

. la filtration ne s'effectuerait pas en profondeur, en raison de la trop faible longueur des fibres et de leur collage contre le tissu,

. les décolmatages demeureraient délicats en raison de la rigidité de la nappe;

La présente invention se propose de fournir un nouveau dispositif de filtration qui bénéficie, dans des conditions remarquables, de l'ensemble des qualités évoquées précédemment.

Un objectif essentiel de l'invention est en particulier de fournir un dispositif qui se prête à des décolmatages automatiques et à des nettoyages faciles.

Un autre objectif essentiel est de fournir un dispositif apte à assurer une filtration en profondeur et, en conséquence, présentant une capacité de rétention élevée, en vue d'abaisser la fréquence des décolmatages et nettoyages nécessaires.

Un autre objectif de l'invention est de réaliser la filtration en introduisant une perte de charge très faible dans l'écoulement du fluide.

Un autre objectif est de fournir un dispositif garantissant une bonne fiabilité de filtration.

Enfin, un autre objectif est de fournir un dispositif bénéficiant, à la fois, d'un encombrement réduit et d'un faible prix de revient.

En résumé, l'invention vise à réunir les qualités essentielles qui sont généralement recherchées dans la filtration : facilité de décolmatage, filtration en profondeur, faible valeur de la perte de charge, bonne fiabilité de la filtra-

4

tion, encombrement et coût réduits.

A cet effet, le dispositif de filtration visé par l'invention comprend un corps possédant deux lumières d'entrée et de sortie de fluide et au moins une cartouche perméable de filtration contenue à l'intérieur dudit corps, en vue d'être traversée par le fluide circulant d'une lumière du corps vers l'autre, ladite cartouche de filtration comprenant un support rigide, percé d'ouvertures de passage et contre lequel est disposée au moins une nappe de fibres textiles ; selon la présente invention, la nappe de fibres textiles est constituée par une nappe à mailles dilatables, venant par une face au contact ou en regard du support rigide et dotée sur sa face opposée d'une multitude de filaments/, lesdits filaments étant accrochés aux fibres de ladite nappe et libres de se coucher contre ladite nappe ou, au contraire, de se redresser par rapport à celle-ci, les lumière d'entrée de fluide et lumière de sortie étant agencées pour pouvoir imposer soit, une circulation de fluide dirigée pour traverser d'abord la nappe puis le support en vue de la filtration, soit une circulation inverse dirigée pour traverser d'abord le support puis la nappe en vue du décolmatage.

La nappe de fibre peut en particulier se présenter sous la forme d'une chaussette extensible emmanchée autour du support rigide.

Il est à noter que le terme "maille" utilisé est prix dans son sens habituel dans le domaine de la filtration et vise chaque orifice élémentaire de passage du fluide.

L'extensibilité de la nappe de fibres textiles peut être conférée à celle-ci par la texture même de cette nappe qui est dans ce cas réalisée à partir de fibres non élastiques, travaillées, en particulier par tricotage, de façon à obtenir des mailles extensibles. Cette extensibilité peut également être conférée à la nappe par la nature des fibres qui sont alors au moins en partie prévues élastiques. Il est également possible de combiner les deux versions en utilisant des fibres, au moins en partie, élastiques, travaillées selon une texture extensible (notamment selon une armure tricotée).

La nature des fibres et des filaments de la nappe est adaptée dans chaque cas à l'application envisagée. Pour une filtration aqueuse, on choisit des fibres et filaments imputrescibles, naturels ou synthétiques (polyamide, élastomère, polyester, acrylique...).

Ainsi dans l'invention, la filtration est effectuée à travers une nappe de fibres, dotée d'une multitude de filaments mobiles et qui forme une chaussette extensible emmanchée sur un support rigide ajouré.

En période de filtration, le flux fluide est amené à s'écouler de l'extérieur vers l'intérieur de ladite chaussette, de façon à tendre à coucher les filaments et à appliquer la chaussette sur le support rigide. Le coefficient de vide d'une telle structure peut être extrêmement élevé (jusqu'à 98 %) et les pertes de charge sont considérablement réduites par rapport aux dispositifs connus. Pour un débit donné, la pression de filtration peut être considérablement abaissée par rapport à celle des dispositifs connus, ce qui est un facteur favorisant considérablement la fiabilité de filtration. En outre, les filaments assurent une préfiltration progressive en profondeur, qui confère au dispositif une capacité de rétention élevée (jusqu'à 15 fois celle des filtres à tamis métallique comparables), cependant que la nappe textile appliquée par le flux sur le support rigide qui la maintient, présente une maille régulière apte à garantir une bonne fiabilité de filtration comparable à celle des filtres à tamis métalliques.

Pour réaliser le décolmatage, il suffit d'inverser le sens d'écoulement du fluide pour l'amener à passer de l'intérieur de la chaussette vers l'extérieur de celle-ci. En raison de l'élasticité de la nappe de fibres et de la mobilité des filaments, les mailles sont dilatées et les filaments se dressent vers l'extérieur dans le sens de l'écoulement : les particules retenues sont ainsi relâchées et entraînées par l'écoulement de façon extrêmement complète.

Pour parfaire encore le décolmatage, la chaussette extensible peut être traitée pour recouvrir ses fibres et ses filaments, d'un mince film en un matériau de nature à réduire le pouvoir d'adhérence des particules à filtrer, sur lesdites fibres et lesdits filaments.

Par exemple, ce film peut être à base de silicone ou fluo-rocarbone. Il facilite le décolmatage en réduisant la tendance des particules à rester accrochées aux fibres ou aux filaments de la chaussette.

Le dispositif de l'invention possède un prix de revient très inférieur à celui de la plupart des dispositifs connus compte-tenu de la simplicité de sa structure et du faible coût des fabrications textiles. En outre, à débit donné et conditions de filtration comparables, son encombrement peut être considérablement réduit par rapport à celui de la plupart de ces dispositifs connus.

Selon un mode de réalisation préféré, la cartouche interne de filtration est insérée de façon amovible dans le corps de façon à pouvoir être retirée aisément en vue de la changer ou d'en assurer un nettoyage poussé (notamment dans le cas de petites installations ne comportant pas de moyens d'inversion du flux). Bien entendu, l'invention s'étend à toute autre version où la cartouche serait disposée dans le corps de façon inamovible.

Dans le cas préférentiel des cartouches amovibles, l'invention s'étend en tant que produit nouveau, à de telles cartouches, comprenant chacune un support rigide percé d'ouvertures de passage et autour duquel est emmanchée une chaussette extensible, ladite chaussette comportant au moins une nappe de fibres textiles à mailles dilatables, dotée, sur sa face externe opposée à celle venant en contact ou en regard du support rigide, d'une multitude de filaments mobiles accrochés aux fibres de ladite nappe.

L'invention ayant été exposée dans sa forme générale, d'autres caractéristiques de celle-ci se dégageront de la description qui suit en référence aux dessins annexés, qui en présentent à titre non limitatif un mode de réalisation ; sus ces dessins qui font partie intégrante de la présente description :

- la figure 1 est une vue en coupe longitudinale par un plan AA, d'un dispositif de filtration conforme à l'invention,

- les figures 2 et 3 en sont des coupes transversales, respectivement par des plans BB et CC,

- les figures 4a et 4b sont des schémas illustrant le fonctionnement du dispositif.

Le dispositif représenté à titre d'exemple aux figures peut par exemple être utilisé pour réaliser la filtration d'une eau dont l'utilisation ultérieure exige des qualités de propreté données.

Ce dispositif comprend essentiellement un corps externe 1 et une cartouche interne amovible 2.

Le corps 1 est constitué par un conduit tubulaire 3, notamment en chlorure de polyvinyle, aux deux extrémités duquel ont été collés des embouts 4 et 5 et qui comporte sur sa surface (à peu près au milieu de sa longueur) une lumière 3a équipée d'une pièce de raccordement 6.

L'embout 4 qui peut être réalisé en chlorure de polyvinyle comprend une partie annulaire évasée 4a et un insert métallique interne 4b formant un raccord fileté et délimitant une lumière 4c d'entrée ou de sortie de fluide dans le corps.

L'embout 5 est lui-même doté d'un insert métallique fileté 5a qui définit une ouverture suffisante pour autoriser le passage de la cartouche 2 ; l'insert 5a permet d'obturer étanchement l'extrémité du conduit 3 au moyen d'un bouchon vissant 7 équipé d'un joint d'étanchéité.

La pièce de raccordement 6 présente la forme d'une bague disposée autour du conduit 1 et comporte un raccord fileté 6a au niveau de la lumière 3a d'entrée ou de sortie de fluide. Un joint assure l'étanchéité autour du raccord 6a, cependant que deux colliers de type classique 8 assurent le maintien de la pièce 6.

La cartouche de filtration 2 présente une longueur adaptée pour s'étendre sensiblement sur toute la longueur du corps 1 à l'intérieur de celui-ci.

Cette cartouche est composée d'un support rigide constituée par un manchon tubulaire 9, fermé à une extrémité par un bouchon vissant 10 et autour duquel est emmanchée une chaussette extensible 11.

Ce manchon 9 possède une extrémité 9a ouverte de diamètre élargi qui s'emboîte en force dans l'embout 4a du corps, de façon à comprimer à ce niveau la chaussette 11 entre l'extrémité 9a et l'embout 4a.

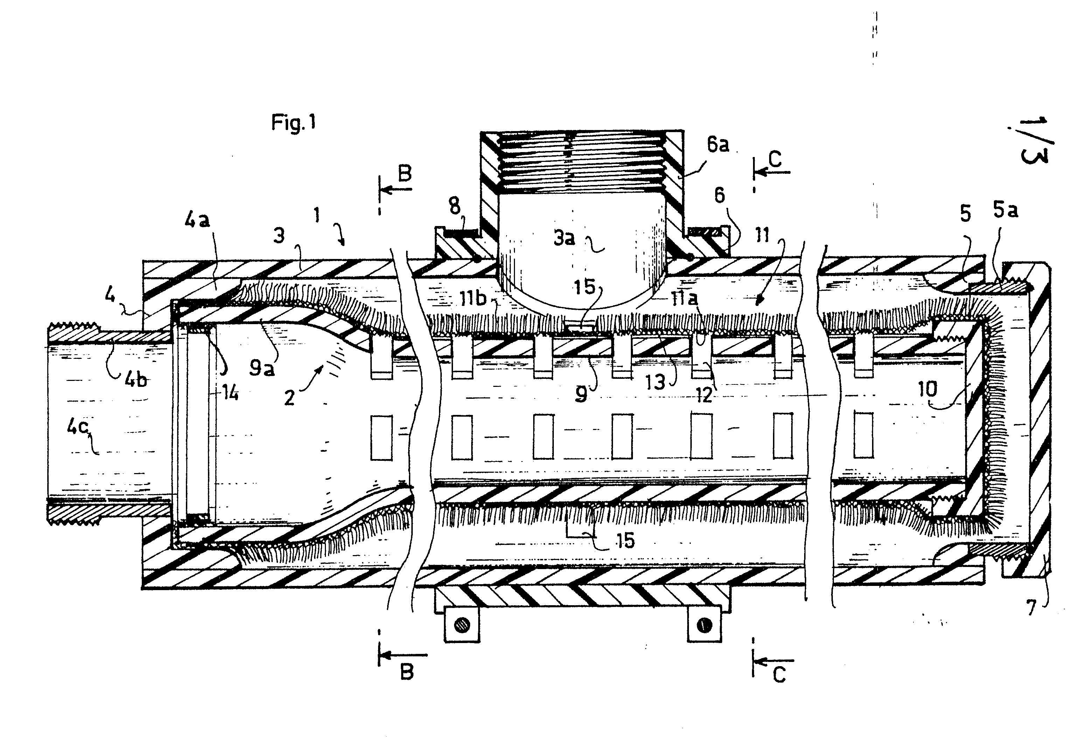

Dans sa partie de diamètre courant, le manchon 9 délimite avec le corps 1 un volume annulaire dans lequel débouche la lumière 3a du corps ; l'autre lumière 4c de celui-ci s'échappe en regard de l'extrémité ouverte du manchon comme le montre la figure 1..

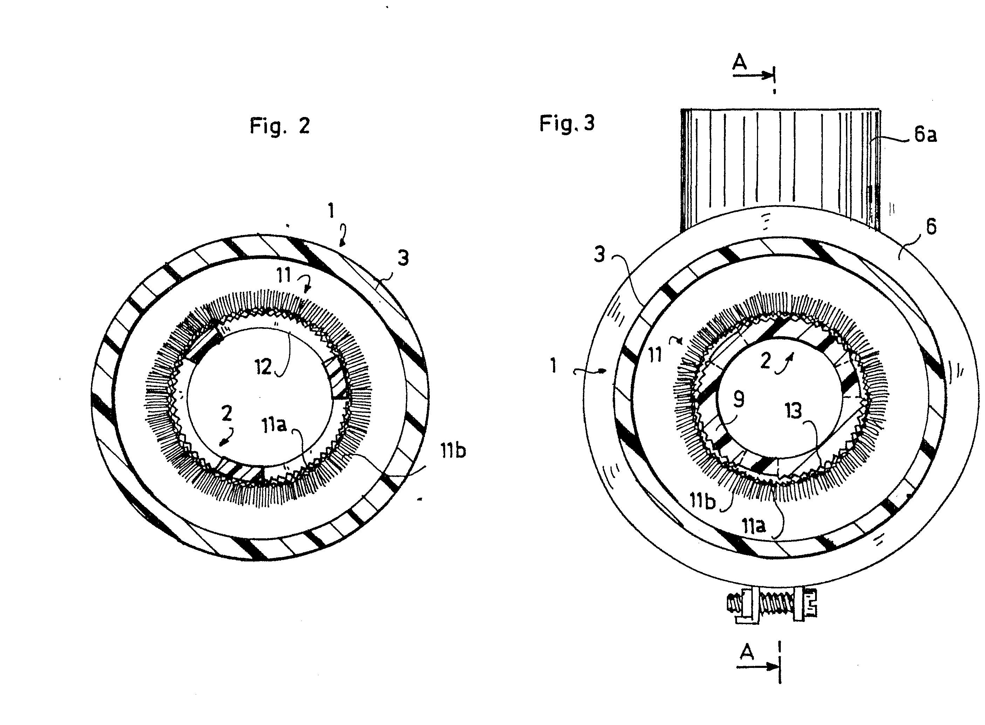

Le manchon 9 comprend sur sa longueur des ouvertures de passage, constituées par des fentes transversales telles que 12 disposées dans des plans transversaux répartis le long du manchon. En l'exemple, trois fentes régulièrement réparties autour du corps sont prévues dans chaque plan transversal comme le montre la figure 2, chaque fente correspondant à un angle au centre de l'ordre de 90°.

En outre, le manchon rigide 9 comprend extérieurement dans ses parties situées entre les fentes 12, des cannelures telles que 13 (figure 3) sur lesquelles s'appuie la chaussette extensible. Ces cannelures qui s'étendent longitudinalement entre les plans transversaux contenant les fentes 12, délimitent entre elles des sillons de guidage de l'écoulement vers lesdites fentes.

La chaussette extensible 11 est composée d'une nappe fibreuse symbolisée en 11a qui en l'exemple est tricotée selon une armure extensible à partir de fils de "LYCRA" ou "ELASTHANE"; à cette nappe fibreuse, est accrochée une multitude de filaments tels que 11b qui sont orientés vers l'extérieur de la chaussette. Ces filaments peuvent être réalisés par divers processus connu, peluchage, accrochage mécanique à la texture tricotée, filaments à deux brins accrochés par un passage dans la texture,... Leur longueur peut être de l'ordre de 1 à 3 cm et leur nature adaptée à l'application, en particulier matière synthétique telle que polyamide.

La chaussette extensible ci-dessus décrite peut être aisément réalisée pour posséder au repos un diamètre de mailles donné et présenter un coefficient de vide très élevé pouvant atteindre jusqu'à 98 % : cette chaussette extensible 11 est enfilée autour du support 9

9

de façon à coiffer entièrement celui-ci ; à son extrémité ouverte, ladite chaussette est repliée à l'intérieur du manchon et sertie par une bague amovible 14.

En outre, au droit de la lumière 9a du corps, la chaussette 11 est maintenue serrée contre le manchon 9 par un clip 15 afin de supprimer toute possibilité de gonflement à ce niveau.

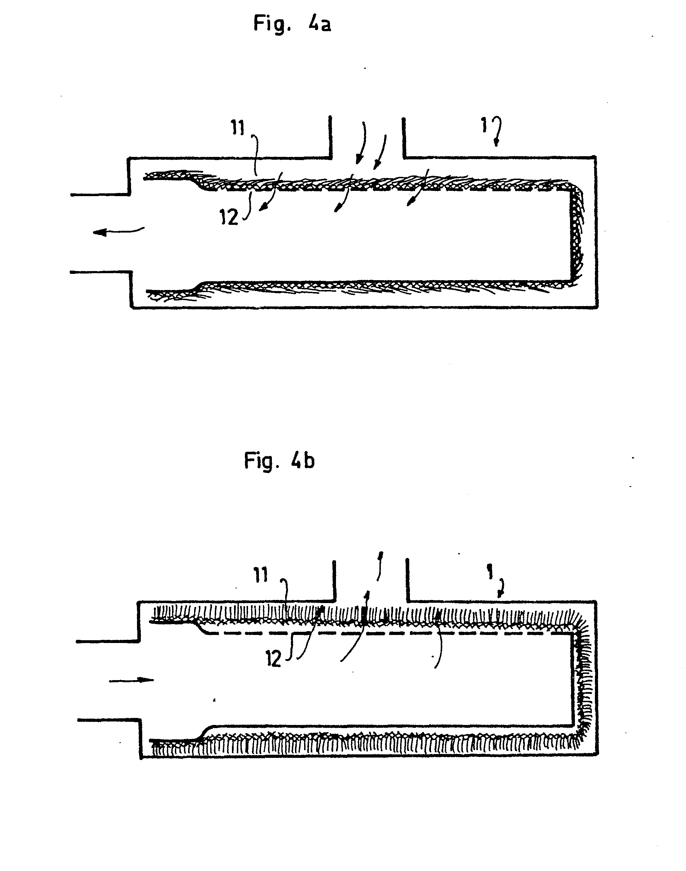

Les figures 4a et 4b présentent le dispositif en cours de fonctionnement, respectivement en phase de filtration et en phase de décolmatage.

En phase de filtration (figure 4a), le flux à filtrer entre par la lumière 3a, se répartit dans le volume annulaire situé autour de la cartouche, traverse la chaussette 11 pour passer à l'intérieur du support 9 par les fentes 12, avant de ressortir par la lumière 4c. Ce flux a tendance à maintenir la chaussette appliquée contre le support rigide et à coucher les filaments sur la surface de ladite chaussette. Ces filaments forment ainsi une masse de préfiltration qui réalise une filtration progressive en profondeur et possède une grande capacité de rétention, cependant que les fibres textiles de la chaussette, qui délimitent des mailles régulières, réalisent un calibrage précis de la filtration avec arrêt de toutes les particules dont la taille dépasse les dimensions desdites mailles. Le coefficient de vide très élevé de la chaussette conditionne une très faible valeur de la perte de charge introduite par le dispositif.

Le dispositif peut être décolmaté de façon automatique en inversant le flux (éventuellement avec un accroissement de la pression d'alimentation). La chaussette extensible 11 est alors gonflée et ses mailles dilatées relâchent les particules retenues qui s'écoulent le long des filaments dressés en même temps que les particules retenues par ces derniers (le clip 15 évite que la chaussette gonfle au niveau de la lumière 3a et obture celle-ci par un effet de clapet durant cette phase de décolmatage).

La cartouche peut également être reti-

10

rée du corps 1 pour être décolmatée ou subir un nettoyage poussé par un brossage ou toute autre opération appropriée.

Il est à noter que les filaments 11b sont choisis de diamètre et de souplesse, adaptés à la finesse et à la capacité de rétention de la préfiltration souhaitée.

De plus, plusieurs dispositifs du type ci-dessus décrit peuvent être combinés avec des mailles de tailles différentes en vue de permettre en une passe d'atteindre un degré de propreté élevé à partir d'un liquide très chargé.

En outre, la chaussette 11 peut le cas échéant présenter des dimensions plus importantes que celles de son support 9 de façon à s'appliquer à l'état plissé contre le support lorsque le flux liquide la traverse en période de filtration et à subir un gonflement plus important lorsque le flux liquide passe en sens opposé en période de décolmatage.

11

## REVENDICATIONS

1/ - Dispositif de filtration d'un fluide comprenant un corps (1) possédant deux lumières (3a, 4c) d'entrée et de sortie de fluide et au moins une cartouche perméable de filtration (2) contenue à l'intérieur dudit corps, en vue d'être traversée par le fluide circulant d'une lumière du corps vers l'autre, ladite cartouche de filtration comprenant un support rigide (9), percé d'ouvertures de passage (12) et contre lequel est disposée au moins une nappe (11a) de fibres textiles, ledit dispositif de filtration étant caractérisé en ce que la nappe (11a) de fibres textiles est constituée par une nappe à mailles dilatables, venant par une face au contact ou en regard du support rigide (9) et dotée sur sa face oppo- sée d'une multitude de filaments/(11b) mobiles/, lesdits filaments étant accrochés aux fibres de ladite nappe et libres de se coucher contre ladite nappe ou, au contraire, de se redresser par rapport à celle-ci, les lumière d'entrée de fluide (3a) et lumière de sortie (4b) étant agencées pour pouvoir imposer soit, une circulation de fluide dirigée pour traverser d'abord la nappe puis le support en vue de la filtration, soit une circulation inverse dirigée pour traverser d'abord le support puis la nappe en vue du décolmatage.

2/ - Dispositif de filtration selon la revendication 1, dans lequel la nappe (11a) est formée à par- tir de fibres non élastiques, travaillées, en particulier par tricotage, selon une armure  extensible pour permettre une dilatation des mailles, les filaments étant accrochés à la nappe par passage à l'intérieur des mailles de celle-ci avec au moins un brin libre s'étendant en dehors de ladite nappe.

3/ - Dispositif de filtration selon la revendication 1, dans lequel la nappe (11a) est formée, au moins en partie, à partir de fibres élastiques, conférant à la nappe une élasticité permettant une dilatation des mailles, les filaments étant accrochés à la nappe par passage à l'intérieur des mailles de celle-ci avec au moins un brin libre s'étendant en dehors de ladite nappe.

4/ - Dispositif de filtration selon la revendication 1, dans lequel la nappe (11a) est formée, au moins en partie, à partir de fibres élastiques, les fibres de

12

ladite nappe étant travaillées, en particulier par tricotage, selon une armure extensible pour accroître l'élasticité de celle-ci et le pouvoir de dilatation des mailles, les filaments étant accrochés à la nappe par passage à l'intérieur des mailles de celle-ci avec au moins un brin libre s'étendant en dehors de ladite nappe.

5/ - Dispositif de filtration selon l'une des revendications 1, 2, 3 ou 4, caractérisé en ce que la nappe (11a) se présente sous la forme d'une chaussette extensible (11) emmanchée autour du support rigide (9), les filaments étant situés à l'extérieur de celle-ci.

6/ - Dispositif de filtration selon la revendication 5, dans lequel le support rigide (9) comprend extérieurement, dans ses parties situées entre les ouvertures de passage (12), des cannelures (13) sur lesquelles s'appuie la chaussette extensible (11) et qui délimitent entre elles des sillons de guidage de l'écoulement vers lesdites ouvertures de passage (12).

7/ - Dispositif de filtration selon l'une des revendications 5 ou 6, caractérisé en ce que le support rigide est constitué par un manchon tubulaire (9) fermé à une extrémité et ouvert à l'autre, ledit manchon étant adapté pour délimiter avec le corps un volume annulaire dans lequel débouche une des lumières (3a) du corps, l'autre lumière (4c) dudit corps s'échappant en regard de l'extrémité ouverte dudit manchon.

8/- Dispositif de filtration selon la revendication 7, dans lequel l'extrémité ouverte du manchon (9) est adaptée pour s'emboîter en force dans un embout (4a) que comporte le corps, de façon à comprimer à ce niveau la nappe textile et les filaments, entre l'extrémité du manchon et l'embout du corps.

9/ - Dispositif de filtration selon les revendications 6 et 7 prises ensemble, caractérisé en ce que les ouvertures de passage du manchon (9) sont constituées par des fentes transversales (12), disposées dans des plans transversaux répartis le long dudit manchon, les cannelures (13) s'étendant longitudinalement entre lesdits plans transversaux.

10/ - Dispositif de filtration selon l'une

13

des revendications 6, 7, 8 ou 9, caractérisé en ce que, au droit de la lumière (3a) du corps, la chaussette extensible (11) est maintenue serrée contre le manchon (9) par un clip (15).

11/ - Dispositif de filtration selon l'une des revendications précédentes, dans lequel la nappe (11a) est traitée pour recouvrir ses fibres et ses filaments (11b), d'un mince film en un matériau de nature à réduire le pouvoir d'adhérence des particules à filtrer, sur lesdites fibres et lesdits filaments.

12/ - Dispositif de filtration selon l'une des revendications précédentes, dans lequel la cartouche interne de filtration (2) est insérée de façon amovible dans le corps (1), ce dernier étant obturé à une extrémité par un bouchon étanche (7) permettant la mise en place ou le retrait de ladite cartouche.

13/ - Cartouche de filtration comprenant un support rigide (9) percé d'ouvertures de passage (12) et autour duquel est emmanchée une chaussette extensible (11), ladite chaussette comportant au moins une nappe (11a) de fibres textiles à mailles dilatables, dotée, sur sa face externe opposée à celle venant en contact ou en regard du support rigide, d'une multitude de filaments (11b) accrochés aux fibres de ladite nappe.

Fig.1

Fig. 2

Fig. 3

A

2/3

0099144

3/3

Fig. 4a

Fig. 4b